**Europäisches Patentamt**

**European Patent Office**

**Office européen des brevets**

(19)

(11) Publication number: **0 187 040**
**A2**

# EUROPEAN PATENT APPLICATION

(12)

(21) Application number: **85309451.4**

(22) Date of filing: **23.12.85**

(51) Int. Cl.⁴: **C 08 G 81/02**

(30) Priority: **21.12.84 FI 845110**

(43) Date of publication of application: **09.07.86**
**Bulletin 86/28**

(84) Designated Contracting States: **AT BE CH DE FR GB IT**
**LI NL SE**

(71) Applicant: **NESTE OY, Keilaniemi,**
**SF-02150 Espoo 15 (FI)**

(72) Inventor: **Bergstrom, Christer, Pietarinkatu 10 C 19,**
**FI-00140 Helsinki (FI)**

(74) Representative: **Lamb, John Baxter et al, Marks &**
**Clerk 57/60 Lincoln's Inn Fields, London WC2A 3LS (GB)**

(54) Modified polyolefin and procedure for its manufacture, and its use.

(57) A modified polyolefin contains 1 to 99% polyolefin, mixed polymer or mixture of polyolefin and 99 to 1% polyvinylalcohol or its mixed polymer, and aforementioned polyolefin component and polyvinylalcohol component are partly or totally chemically bound to each other. To the polyolefin chain there is copolymerized, grafted or otherwise chemically joined a chemical compound which reacts chemically with polyvinylalcohol. The chemical compound joined to the polyolefin chain is suitably a silane or alkoxysilane.

EP 0 187 040 A2

M&C FOLIO: 799P51427                    WANGDOC: 0312i

## MODIFIED POLYOLEFIN AND PROCEDURE

## FOR ITS MANUFACTURE, AND ITS USE.

The invention teaches the manufacture of an olefin/vinylalcohol segment mixed polymer by chemically joining polyvinylalcohol (PVA) to polyolefin, for instance by grafting silane to a polyolefin and condensing the silane with the hydroxy groups of polyvinylalcohl or a mixed polymer thereof. In this way, branched polymer molecules are obtained which consist of polyolefin branches (non-polar) and polyvinylalcohol branches (polar). An olefin/vinylalcohol segment mixed polymer possesses properties both of the polyolefin and of polyvinylalcohol. It can be machined by all polyolefin machining methods, and the product is both water-tight (polyolefin) and tight against gas and oil (polyvinylalcohol. It is moreover possible by this procedure to increase the molecular weight of the polymer (to lower the melt index) substantially without risk of cross-linking. Since the olefin/vinylalcohol segment polymer is both polar and non-polar at the same time, it can also be used as a so-called emulsifier polymer in plastic alloys consisting of polar as well as

2

non-polar components, or an adhesion layer in multi-ply products consisting of polar plies, or metal and non-polar plies.

At present, an ethylene/vinylalcohol random mixed polymer is manufactured by hydrolysing an ethylene/vinylacetate random mixed polymer. Hydrolysis (alcoholysis) is effected with the aid of alcohol, and the mixture may be either acid or basic, and the hydrolysis may be carried out in the solid state, in the molten state or in solution. There is multitude of patents concerning this procedure for manufacturing ethylene/vinylacohol random polymers, a summary of them being found in the article "Rectivity of Ethylene Vinyl Acetate Copolymers: A Critical Evaluation of the Comprehensive Patent Literature on the Acetoxy-Hydroxide Transformation of Ethylene Vinyl Acetate Copolymers", R.J. Koopmas, R. van der Linden and E.F. Vansant, Polymer Engineering and Science, July 1982, Vol 22, No. 10, p. 645. All these procedures are based on hydrolysis of the acetate group to give an alcohol group, and there is no mention of any segment mixed polymers. Commercial ethylene/vinylalcohol random mixed polymers are of two kinds. Brands containing 20 to 30 mol-% of vinylalcohol are marketed and their use is mainly for die pressing and for powder coating of steel tubing ("Levasint" by Bayer, and "Mirawithen" by VEB

3

Leuna-Werke Walter Ulbricht). These brands are made from ethylene/vinylalcohol random mixed polymer manufactured by a high pressure technique. Also commercially available are brands containing 60 to 80 mol-% vinylalcohol, which are mostly used for gas-tight layers in multi-ply products (EVAL by Kuraray, and Soarnol by Nippon Gohsei). These brands are manufactured by adding ethylene to the polyvinyl acetate process and hydrolysing the product in the same manner in which polyvinylalcohol (PVA) is made from polyvinylacetate. If there is less than 60 mol-% vinylalcohol, the gas-tightness of the product goes down abruptly. When the ethylene/vinylalcohol random mixed polymer contains more than 60 mol-% vinylalcohol, it forms monoclinic crystals (the same as PVA), and when there is less than 20 mol-% vinylalcohol, it forms rhobmic crystals (the same as polyethylene). Between these contents, a mixed crystal structure is dense enough to be applicable as a barrier plastic.

It is possible to produce silicones from silanes by polycondensation but in addition, silanes are used n the plastic industry also as coupling agents, as crosslinking agents and to improve adhesion. The coupling agent idea is based on causing the hydroxyl groups on the surface of a pigment or filler to condense with a silane; the chemical composition of the surface

4

is thereby changed to be such that it wets the plastic,
is admixed with it or possibly reacts chemically with
the plastic. The miscibility of filler and plastic, the
adhesion between them and the properties both of the
molten and solid plastic mixture are improved in this
way. It is also possible to cross-link, for instance,
plyethylene with a silane in the manner so that
unsaturated alkoxysilane is grafted, with the aid of
peroxide or of electron radiation, to the polyethylene
chain, whereafter the silane groups are allowed to
undergo hydrolysis and to condense with the aid of water
and of a condensation catalyst. There is an abundance
of patents and patent applications dealing with this
technique. Grafting may also be achieved with silyl
peroxide (Akzo), or the unsaturated silane may be added
as a comonomer at the polymerizing step already
(Mitsubishi). With a silane it is also possible to
improve the adhesion e.g. between plastic and metal, or
between non-polar plastic and polar plastic, in
multi-ply products (Neste).

Polyvinylalcohol (PVA) is mostly used as a
dispersing agent in PVC suspension polymerizing, and by
regulating the molecular weight of the PVA and its
degree of hydrolysis one is enabled to regulate the
properties of the PVC. When PVA has a high enough
degree of hydrolysis, it is water-soluble. This

5

water-solubility and difficult maching restrict the use of PVA in the plastics industry. Dry PVA is interesting in itself because it has excellent barrier properties (gas-tight). With a view to eliminating these drawbacks, the ethylene/vinylalcohol random mixed polymer (EVAL) has been developed. However, the gas-tightness of EVAL is dependent on moisture, and it is therefore necessary to protect the EVAL film against air humidity, for instance with a polyethylene film on both sides. Moreover, EVAL does not adhere to plyethylene as it is: an adhesion plastic (e.g. Admer) has to be used between these components in addition. It is, however, a fact that such a five-ply coextrusion design is high exacting and expensive, and EVAL and adhesion plastics are likewise very expensive.

EVAL may also be admixed with plastic, and it is then less sensitive to moisture. For instance, EVAL is admixed with polyethylene terephthalate (PET), and in this way bottles with better gas-tightness can be produced than by the aid of coextrusion (Eastman-Kodak). EVAL may also be admixed with polyolefins, whereby adequate gas-tightness is obtained (a 30 to 50% addition of EVAL is equivalent to the tightness of polyamide) and, at the same time, adhesion to polyolefins (no adhesion plastic required) (Neste).

6

The above-mentioned mixtures are macro-mixtures. Two phases are produced, and for this reason the products are not transparent.

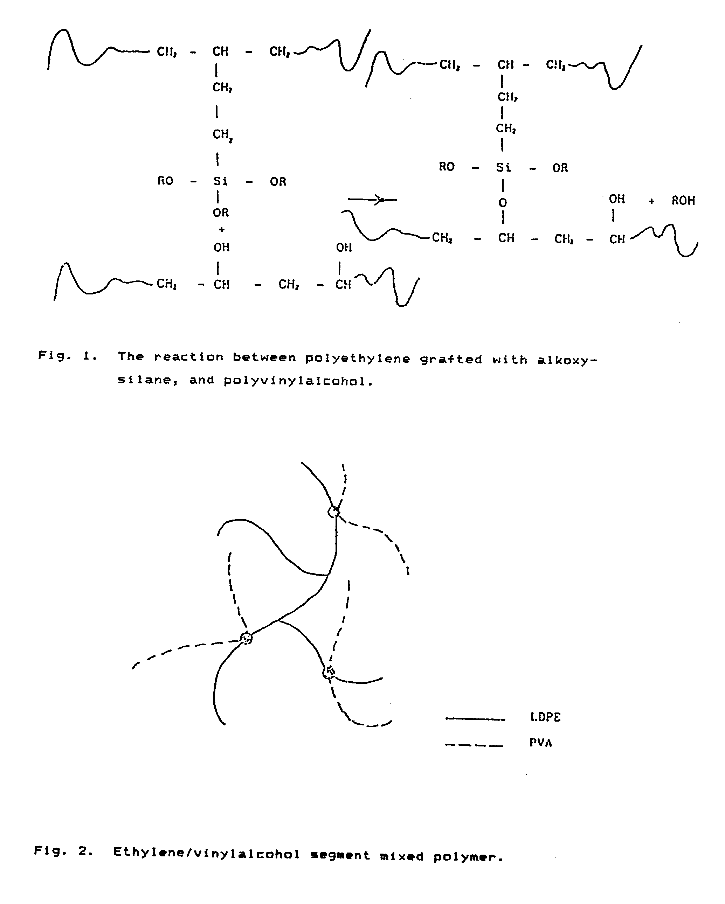

According to the present invention it has been found, among other things, that a silane which has been grafted to or copolymerized with a polyolefin chain reacts with polyvinylalcohol or with its mixed polymer. This reaction takes place without presence of water and without condensation catalyst (Fig. 1). When the reaction takes place in a dry mix, no cross-linking occurs: the polyolefin molecule and the polyvinylalcohol molecule combine with the aid of silane. Mixing and reaction take place at the micro-level (the molecular level), and for this reason there is obtained a transparent, completely new plastic, an olefin/vinylalcohol segment mixed polymer (Fig. 2). As polyolefin, there may be used high pressure polyethylene (LDPE), low pressure polyethylene (HDPE, MDPE, LLDPE), polypropylene (PP), poly-1-butylene (PB), poly-4-methyl-1-pentene (TPX) or other polyolefin plastics, rubbers or additives. It is also possible to use mixed polymers, mixtures or homopolymer/mixed polymer mixtures of the polymers mentioned. According to the invention, the silane may be grafted using a peroxide, using an electron radiation or by another expedient, or it may be an unsaturated silane added as a

7

comonomer at the polymerizing step, such as vinyltrimethoxy-silane, vinyltriethoxysilane, vinyl-tris(betamethoxyethoxy)silane or gamma-methacryloxypropyltrimethoxysilane. The grafting may also be carried out using silylperoxide. According to the invention, the polyvinylalcohol may be of the brands commonly used in suspension polymerizing PVC, which may be completely or partially (with vinylacetate as comonomer) hydrolysed; ethylene/vinylalcohol random mixed polymer, or equivalent partly hydrolysed terpolymer; or any other polymer containing between 0.5 and 100% by weight vinylalcohol.

The olefin/vinylalcohol segment mixed polymer may be prepared using 1 to 99% by weight polyolefin, 99 to 1% by weight polyvinylalcohol and 10% by weight silane, calculated on the polyolefin, and the peroxide quantity required for grafting (e.g. 0.01 to 0.5% by weight dicumylperoxide, calculated on the polyolefin) or another radical former. All chemical components that are required may be added in a melt mixer (Banbury mixer, Continuous mixer, Buss Kokneader, etc.) simultaneously in the form of a dry mix, premixed and grafted in solid form or in molten form, or the silane/peroxide mix and the polyvinylalcohol may be separately added. The main requirement is that addition of the components takes place under such conditions that

8

the silane first becomes grafted to the polyolefin and only thereafter reacts with polyvinylalcohol. The polyvinylalcohol may be added after grafting, or the silane grafting may be carried out at a temperature at which the polyvinylalcohol is not molten. The reaction mix should be dry so that the silane does not condense. This implies, in the first place, that the polyvinylalcohol has to be dried.

The olefin/vinylalcohol segment mixed polymer manufactured as taught by the invention may be used as it is in those applications where ethylene/vinylalcohol random mixed polymer is being used. It may be used as a barrier layer in multi-ply products such as film, bottles, and other products. In coextruded products, commercial adhesion plastics (e.g. Admer, Plexar, etc.) may be used for adhesion layers, or they may be omitted, depending on the polyvinylalcohol content and on the properties of the other plastic plies. It may also be used in powder coating. The advantage of the olefin/vinylalcohol segment mixed polymer manufactured as taught by the invention is that its manufacture is exceedingly simple and inexpensive, and the raw materials are likewise comparatively inexpensive, compared with commercial EVAL. Furthermore, many kinds of raw materials may be used, for instance polypropylene instead of polyethylene and the degree of hydrolysis of the polyvinylalcohol may vary. The vinyl alcohol content may also be regulated within wide limits, consistent with the intended use of the end product. Thanks to the segmented structure of the olefin/vinylalcohol segment mixed polymer, good adhesion to polyolefins is achieved in coextrusion (no need for adhesion plastic as an intervening layer), and the end products may be hot-seamed with themselves or with polyolefin. It is thus to be understood that the olefin/vinylalcohol segment mixed polymer can be used, as it is, as an intervening layer between polyolefin films (three-ply coextrusion) or together with another polar plastic layer, for instance polyamide. The olefin/vinylalcohol segment mixed polymer is both gas-tight and water vapour-tight, and the gas-tightness is not very highly sensitive to moisture. It may furthermore be diluted with polyolefin or with polyvinylalcohol according to whether higher water vapour tightness or gas tightness is desired. Furthermore, it may be mixed with other polar or non-polar plastics and, in this way, their barrier properties (gas or water vapour) may be improved or their surface properties may be changed (to become polar or non-polar). The olefin/vinylalcohol segment mixed polymer manufactured as taught by the invention may also be used as a so-called emulsifier polymer in polymer mixtures and in alloys, in which case it becomes concentrated between immiscible phases and improves the adhesion between them and the usability and machinability of the end product. By using silane in higher proportion to the PVA content, the melt index can be lowered, and when the melt index of the polyolefin is low, very low melt indices (high molecular weights) are reached without cross-linking in the product. A product is obtained which has molten and solid state properties resembling HMW-HDPE. Such olefin/vinylalcohol segment mixed polymers with very high molecular weight could be used in applications where high molten strength and good mechanical properties, and durability of the chemicals, are required. Applications of this kind are: cable sheaths, tubes and pipes, die-blown products, certain high-strength die-cast products, rotation-cast products, sintered products. Multi-component products may also be contemplated because the hydroxyl groups of PVA have good adhesion properties to metals, ceramic substances, fillers and polar plastics, etc., and whenever required, these adhesion characteristics may be further improved by using coupling agents, such as silane for instance. In these instances, too, the tightness properties of PVA may be utilized. It would in fact be possible, of such an olefin/vinylalcohol segment mixed polymer with very high molecular weight, to construct a strong and tight petrol tank for an automobile. The high molten strength and the high crystallizing point of PVA could also be

11

utilized in manufacturing foamed products.  When PVA
crystallizes, the foam will no longer shrink.  The
gas-tightness, heat tolerance and strength of a PB tube
could be improved by grafting silane to the PB and
making it react with PVA, or by coextruding or mixing
the PB with completed olefin/vinylalcohol segment mixed
polymer.

By means of the following, non-restrictive examples
shall be illustrated the manufacturing of the
olefin/vinylalcolhol segment mixed polymer.

Using a Haake Rheomix 4000 mixer, the formulations
given in Tables 1 and 3 were mixed for 7 minutes, using
Roller rotors, speed 85 $min^{-1}$ and jacket temperature
200°C.  A nitrogen bed was used during mixing, and the
PVA was dried for 12 hrs at 80°C, prior to mixing.

Table 1

| Test | Polyolefin | Peroxide | Silane | PVA |
|---|---|---|---|---|
| 1 | LDPE, MI=7,5; ρ=0,918 | 0,05 phr DCP | 0,5 phr VTMO | 10 % PVA-1 |
| 2 | LDPE, MI=7,5; ρ=0,918 | 0,05 phr DCP | 1,0 phr VTMO | 10 % PVA-1 |
| 3 | LDPE, MI=7,5; ρ=0,918 | 0,05 phr DCP | 1,5 phr VTMO | 10 % PVA-1 |
| 4 | LDPE, MI=7,5; ρ=0,918 | 0,05 phr DCP | | 10 % PVA-1 |
| 5 | LDPE, MI=7,5; ρ=0,918 | | | 10 % PVA-1 |
| 6 | LDPE, MI=7,5; ρ=0,918 | 0,05 phr DCP | 1,0 phr VTEO | 10 % PVA-1 |
| 7 | LDPE, MI=7,5; ρ=0,918 | 0,05 phr DCP | 1,0 phr VTMO | 10 % PVA-2 |
| 8 | HDPE, MI=5,0; ρ=0,955 | 0,05 phr DCP | 1,0 phr VTMO | 10 % PVA-1 |
| 9 | LDPE, MI=7,5 ρ=0,918 | 0,05 phr DCP | 1,0 phr VTMO | 20 % PVA-1 |

12

After mixing, the mixture was rough-ground, and of the ground material sheets were pressed at 200°C. The following were determined by measurement: melt index (MI), density (?), degree of cross-linking, tensile strength, fraction soluble in hot 50:50 water/isopropanol mixture, i.e., the degree of grafting of PVA, and the oxygen permeability of a 100 μ sheet (Tables 2 and 4).

### Table 2

| Test | Melt Index | Density | Degree of cross-linking | Yield Limit | Ultimate Tensile Strength | Elonga-tion | Soluble Part | Oxygen Transmission (Oxtran 100, |
|------|------------|---------|-------------------------|-------------|---------------------------|-------------|--------------|-----------------------------------|
| | g/10 min | g/cm$^3$ | % | MPa | MPa | % | % | cm$^3$/m$^2$ d) |
| 1 | 1,30 | 0,959 | 3,7 | 9,5 | 10,0 | 170 | 3,7 | 1 338 |
| 2 | 0,46 | 0,956 | 3,8 | 9,2 | 10,0 | 140 | 2,1 | 1 205 |
| 3 | 0,02 | 0,940 | 4,5 | 10,3 | 10,5 | 40 | 1,6 | 1 137 |
| 4 | 1,53 | 0,960 | 3,5 | 8,4 | 9,6 | 90 | 5,2 | 1 568 |
| 5 | 7,72 | 0,945 | 0,2 | 9,0 | 9,9 | 40 | 8,6 | 1 756 |
| 6 | 0,01 | 0,952 | 4,0 | 9,7 | 10,0 | 120 | 1,3 | 1 048 |
| 7 | 0,07 | 0,943 | 1,9 | 9,9 | 10,2 | 90 | 1,1 | 1 035 |
| 8 | 0,01 | 0,971 | 1,8 | 16,6 | 25,2 | 1010 | 2,7 | 423 |
| 9 | 0,01 | 0,970 | 3,2 | 10,3 | 11,4 | 80 | 2,4 | 663 |

In Table 1 are given formulations which contain fairly little polyvinylalcohol, and the quantities and types of components have been systematically varied. Table 2 reveals that by grafting more vinyltrimethoxysilane (VTMO) to LDPE (Tests 1, 2 and 3) one achieves more efficient binding (a smaller soluble

13

part) of Mowiol 4/88 (PVA-1). At the same time, however, the melt index (MI) decreases, owing to increasing molecule size. However, the degree of cross-linking is rather low all the time, and oxygen transmission, measured by the pressure-free Oxtran 100 method, decreases slightly. By totally omitting the silane (Test 4), under these conditions about half of the PVA-1 can be made to react with LDPE, and the gas transmission is then also clearly higher. On leaving out the dicumyl peroxide (DCP) as well (Test 5), the situation becomes even worse, but in a mechanical LDPE/10% PVA-1 mixture of this type the oxygen transmission is still lower than that of pure LDPE, which is 2,100 $cm^3/m^2d$. By using vinyltriethoxysilane (VTEO) (Test 6), PVA-1 can be bound to LDPE slightly more efficiently than by using vinyltrimethoxysilane (VTMO) (Test 2). The soluble part is less and the oxygen transmission lower, but at the same time the melt index has gone down strongly. Alkotex 72,5 (PVA-2) (Test 7) produces somewhat lower oxygen transmission results than Mowiol 4/88 (PVA-1) (Test 2) although the degree of hydrolysis (the vinylalcohol content) is somewhat lower. It seems as if PVA-2 reacted better with silane (lower soluble part and lower melt index). The density ( ) is then, naturally, lower. By using HDPE for basic polymer (Test 8), or higher PVA-1 contents (Test 9), the oxygen tranmission can be reduced even more. 1.0 phr VTMO and 0.054 phr DCP appears to be enough for higher PVA-1 contents as well (smaller soluble part). Striking are the good strength characteristics of the HDPE/vinylacholol segment mixed polymer.

Since the oxygen transmission results stated in Table 2 were not low enough with a view to barrier plastic application, the same technique was applied in making mixtures containing 40%, 50% and 60% PVA-1 Table 3 shows the formulations, and the observation can be made here that the basic polymer was LDPE and that a fairly small amount of DCP and VTMO was used, because the share of LDPE of the total quantity was rather small. For use references, corresponding LDPE/PVA-1 mixtures without chemical binding were also prepared.

Table 3

| Test | Polyolefin | Peroxide | Silane | PVA |
|------|------------|----------|--------|-----|
| 10 | LDPE, MI=4,0; ρ =0,922 | 0,03 phr DCP | 1,0 phr VTMO | 40 % PVA-1 |
| 11 | LDPE, MI=4,0; ρ =0,922 | 0,03 phr DCP | 1,0 phr VTMO | 50 % PVA-1 |
| 12 | LDPE, MI=4,0; ρ =0,922 | 0,03 phr DCP | 1,0 phr VTMO | 60 % PVA-1 |
| 13 | LDPE, MI=0,2; ρ =0,922 | | | 40 % PVA-1 |
| 14 | LDPE, MI=0,2; ρ =0,922 | | | 50 % PVA-1 |
| 15 | LDPE, MI=0,2; ρ =0,922 | | | 60 % PVA-1 |

## Table 4

| Test | Melt Index | Density | Degree of cross-linking | Yield Limit | Ultimate Tensile Strength | Elon-gation | Soluble Part | Oxygen Transmission (Oxtran 100, |
|------|------------|---------|-------------------------|-------------|---------------------------|-------------|--------------|-----------------------------------|
| | g/10 min | g/cm$^3$ | % | MPa | MPa | % | % | cm$^3$/m$^2$ d) |
| 10 | 0,39 | 1,05 | 2,8 | 9,6 | 12,7 | 12 | 3,1 | 143 |
| 11 | 0,24 | 1,08 | 2,1 | 12,3 | 13,7 | 7 | 5,0 | 64 |
| 12 | 0,10 | 1,13 | 1,7 | 13,5 | 16,0 | 6 | 2,4 | 9 |
| 13 | 3,75 | 1,03 | 0,4 | 7,3 | 8,6 | 16 | 33,9 | 2 489 |
| 14 | 4,63 | 1,06 | 0,7 | 6,5 | 7,1 | 11 | 47,4 | 3 691 |
| 15 | 6,37 | 1,12 | 0,9 | 13,7 | 14,5 | 5 | 55,6 | 4 387 |

In Table 4 is seen the effect of high PVA-1 contents on the properties of ethylene/vinylalcohol segment mixed polymer (Tests 10-12). With increasing PVA-1 contents, the oxygen transmission goes down very steeply so that when the PVA-1 content is 60% the oxygen transmission of the ethylene/vinylalcohol segment mixed polymer corresponds to the level of polyamide-6 (PA-6) (11.2 cm$^3$/m$^2$d). Simultaneously, the melt index goes down, and density and stiffness increase. In spite of the high PVA-1 content, the soluble part is very small and the degree of cross-linking is low. If, in contrast, the PVA-1 is not chemically bound to polyethylene, the properties show no improvement (Tests 13-15). The oxygen transmission is higher than that of polyethylene and increases with increasing PVA-1 content. Then also the melt index remains high and the PVA-1 is almost totally soluble. With the aforementioned mixtures, coextruded strips with LDPE (MI = 4 g/10 min., = 0.922 g/cm$^3$) were also run, the melt index being 200°C, and it was found that samples 10-12 adhered fully to polyethylene, while sample 13-15 had no adhesion. The ethylene/vinylalcohol segment mixed polymer is a more advantageous barrier plastic, in this respect, than PA-6, which requires a separate adhesion plastic layer when coextruded with polyethylene.

An ethylene/vinylalcohol segment mixed polymer containing 50% PVA-1 was also produced in a continuously operating Buss Kokneader mixer in the manner that 50% LDPE (MI = 7.5 g/10 min., ∂= 0.918 g/cm$^3$) and 50% dried PVA-1 were mixed as a dry mix and introduced into the Buss Kokneader, which had temperature profile 180°C, 210°C, 180°C. After the first zone, 0.03 phr DCP and 1.0 phr VTMO were injected. The ethylene/vinylalcohol segment mixed polymer thus obtained was granulated and from the granulate a blow film with 100μm thickness was prepared. Regarding the properties of the film there may be observed that it was homogeneous and transparent, implying that LDPE and PVA had been so efficiently mixed, as a result of grafting, that the

17

size of separate phases was less than the wavelength of light.  It may also be observed that the oxygen transmission of the blown film is considerably less than that of equivalent pressed sheet (Test 16, 6.7 $cm^3/m^2 d$).

18

CLAIMS:-

1. A modified polyolefin, characterized in that it contains 1 to 99% polyolefin, mixed polymer or mixture of polyolefin and 99 to 1% polyvinylalcohol or its mixed polymer and that the polyolefin component and polyvinylalcohol component are partly or totally chemically bound to each other.

2. Modified polyolefin according to claim 1, characterized in that to the polyolefin chain has been copolymerized, grafted or in another way chemically joined a chemical compound which reacts chemically with polyvinylalcohol.

3. Modified polyolefin according to claim 1 or 2, characterized in that the chemical compound joined to the polyolefin chain is a silane.

4. Modified polyolefin according to any one of claims 1-3, characterized in that the chemical compound joined to the polyolefin chain is an alkoxysilane.

5. Modified polyolefin according to any one of claims 1-4, characterized in that its melt index (190°C, 2.16 kg) is less than 0.2 g/10 min.

6. Procedure for manufacturing modified polyolefin, characterized in that its melt index (190°C, 2.16 kg) is less than 0.2 g/10 min.


7. Procedure for manufacturing modified polyolefin, characterized in that to the polyolefin chain is copolymerized, grafted or in another way chemically joined a chemical compound which reacts chemically with polyvinylalcohol.


8. Procedure according to claim 6, characterized in tht the reaction is carried out in the absence of water or a condensation catalyst.


9. Procedure according to claim 6 or 7, characterized in that 1 to 99% by weight of polyolefin, mixed polymer or mixture of polyolefin and 99 to 1% by weight of polyvinylalcohol or its mixed polymer are used and that aforementioned polyolefin component and PVA component are partly or totally chemically bound to each other.


10. The use of modified polyolefin according to any one of claims 1-5 as one or several layers in a multi-ply film.


11. The use of modified polyolefin according to any one of claims 1-5 as emulsifier polymer in polymer mixtures and reinforced polymer combinations composed of polar and non-polar polymers.

Fig. 1.  The reaction between polyethylene grafted with alkoxy-
         silane, and polyvinylalcohol.

Fig. 2.  Ethylene/vinylalcohol segment mixed polymer.